# EUROPEAN PATENT SPECIFICATION

(11) **EP 2 720 418 B1**
(45) Date of publication and mention of the grant of the patent: **22.02.2017**
(21) Application number: 12840190.8
(22) Date of filing: 15.08.2012
(51) Int. Cl.: H04L 12/70, H04L 12/709, H04L 12/26, H04L 12/24

(54) **LACP LINK SWITCHING AND DATA TRANSMISSION METHOD AND DEVICE**
LACP-VERKNÜPFUNGSSCHALTUNG SOWIE DATENÜBERTRAGUNGSVERFAHREN UND -VORRICHTUNG
PROCÉDÉ ET DISPOSITIF DE COMMUTATION DE LIAISON LACP ET DE TRANSMISSION DE DONNÉES

(30) Priority: 12.10.2011 CN 201110308340
(43) Date of publication of application: 16.04.2014
(73) Proprietor: Huawei Technologies Co., Ltd., Longgang District Shenzhen, Guangdong 518129 (CN)
(72) Inventor: ZHANG, Xiaoyi, Shenzhen Guangdong 518129 (CN); WANG, Cheng, Shenzhen Guangdong 518129 (CN); DING, Chenglong, Shenzhen Guangdong 518129 (CN); SUN, Qi, Shenzhen Guangdong 518129 (CN); ZHAO, Fenghua, Shenzhen Guangdong 518129 (CN)
(74) Representative: Isarpatent
(86) International application number: PCT/CN2012/080126
(87) International publication number: WO 2013/053267

(56) References cited:
- CN-A- 101 355 511
- CN-A- 101 616 067
- CN-A- 101 692 652
- CN-A- 102 364 892
- US-A1- 2011 194 562
- Cisco: "Cisco ASR 9000 Series Aggregation Services Router L2VPN and Ethernet Services Configuration Guide", , 30 April 2011 (2011-04-30), pages 1-376, XP055151261, San Jose, CA 95134-1706, USA Retrieved from the Internet: URL:http://www.cisco.com/c/en/us/td/docs/r outers/asr9000/software/asr9k_r4-1/lxvpn/c onfiguration/guide/lesc41.pdf [retrieved on 2014-11-06]
- Jean-Philippe Vasseur ET AL: "Network Recovery: Protection and Restoration of Optical, SONET-SDH, IP, and MPLS" In: "The Morgan Kaufmann Series in Networking", 19 August 2004 (2004-08-19), Elsevier, XP055151279, ISBN: 978-0-08-051251-8 pages 1-544, * chapter 4.4.; page 226 - page 227 *
- Ieee: "IEEE Std 802.1AX (TM) -2008 IEEE Standard for Local and metropolitan area networks-", , 3 November 2008 (2008-11-03), pages 1-163, XP055151247, 3 Park Avenue, New York, NY 10016-5997, USA Retrieved from the Internet: URL:http://standards.ieee.org/getieee802/d ownload/802.1AX-2008.pdf [retrieved on 2014-11-06]

## Description

### TECHNICAL FIELD

The present invention relates to the field of communication technologies, particularly to a method and a device for LACP link switching and data transmission.

### BACKGROUND

An LACP (Link Aggregation Control Protocol, link aggregation control protocol) is a protocol for achieving dynamic link aggregation and disaggregation, and the aggregation is to improve transmission bandwidth and reliability of the system. Under the control of the LACP protocol, multiple links (member link) aggregate to a logic link with a higher bandwidth, the logic link is called an aggregation group and the link including the aggregation group is called an LACP link. The number of the member links aggregated in one aggregation group is usually determined according to the bandwidth requirement of the traffic.

Generally, the number of active interfaces at one end of the aggregation group member link is at least larger than or equal to a preset minimum active link number for corresponding traffic transmission. When such requirement is satisfied, the aggregation group is in an UP state, the LACP link is "ON" and ready for use; when such requirement is not satisfied, that is, the number of active interfaces at one end of the aggregation group member link is smaller than the preset minimum active link number, the aggregation group is in a DOWN state, the LACP link is "OFF" and unavailable for use.

The LACP link switching procedure depends on the state of the LACP link aggregation group. In order to monitor a state change of the aggregation group, both ends of the aggregation group periodically transmit a LACPDU (LACP Data Unit) message to each other. After receiving the LACPDU packet, one end of the aggregation group compares information
carried by the LACPDU packet, such as system priority, interface priority of the opposite end, with configuration of the local end, in the case of inconformity, adjusts configuration of the local end based on the comparison result. The number of the active interfaces in the aggregation group will change in the process of adjustment. When the number of the active interfaces increases or decreases to a certain degree, the state of the aggregation group will change alternately between the UP and DOWN states, causing the LACP link to switch between "ON" and "OFF", so that the link appears a flash-off procedure, i.e., the link is OFF and ON. Due to this "flash-off" effect, the user terminal will be "off-line" frequently, and it is needed to re-access network and re-establish data links when communicate again after a change from "off-line" to "on-line", such adversely affects normal communication and reduces network service level.

Furthermore, when the active interface in the aggregation group changes to be an inactive interface, the interface is usually configured to be a "dead" interface having no data-transceiving function, however, if the state change of the interface is caused by reasons other than a "physical link failure", such can cause message having been transmitted on the LACP link to lose and affect normal communication.

The document "Cisco ASR 9000 Series Aggregation Services Router L2VPN and Ethernet Services Configuration Guide" (30 April 2011, pages 1-376, XP055151261, San Jose, CA 95134-1706, USA) discloses a method for link aggregation control protocol LACP link switching monitoring state changes of interfaces in an LACP link aggregation group.

The document "Network Recovery: Protection and Restoration of Optical, SONET-SDH, IP, and MPLS" (Jean-Philippe Vasseur ET AL: In: "The Morgan Kaufmann Series in Networking", 19 August 2004, Elsevier, CP055151279, ISBN: 978-0-08-051251-8, pages 1-544) implicitly discloses that "hold-off timer" for keeping an interface in active state.

### SUMMARY

Accordingly, embodiments of the present invention provide a method and a device for

LACP link switching, so as to solve the problem of "flash-off" in the LACP link switching process, and thus avoid frequent "off-line" during user's communication.

According to one aspect, a method for link aggregation control protocol LACP link switching comprises:
monitoring state changes of interfaces in an LACP link aggregation group;
when monitoring that a state change occurs on an active interface in the LACP link aggregation group, determining whether a number of active interfaces in the LACP link aggregation group is smaller than a preset minimum active link number, and if yes, keeping states of N interfaces among interfaces on which a state change occurs being an active state, so that the number of the active interfaces in the LACP link aggregation group is greater than or equal to the preset minimum active link number, where N is a natural number and N is smaller than or equal to the number of interfaces, on which a state change occurs, among the active interfaces in the LACP link aggregation group; and
when monitoring that a state change occurs on an inactive interface in the LACP link aggregation group, adjusting states of M interfaces among the N interfaces kept in the active state into an inactive state, where M is a natural number and M is smaller than or equal to N.

Optionally, when keeping states of the N interfaces among interfaces, on which a state change occurs, being an active state, a timer is started, and then when no state change of an inactive interface in the LACP link aggregation group is monitored during a preset time, the states of M interfaces among the N interfaces kept in the active state are adjusted into the inactive state.

Optionally, the preset time is a long period or a short period of LACP configuration.

Optionally, when determining that the number of the active interfaces in the LACP link aggregation group is greater than or equal to the preset minimum active link number, states of Q interfaces among interfaces on which a state change occurs are kept being the active state, so that the number of the active interfaces in the LACP link aggregation group is greater than or equal to the preset minimum active link number, where Q is a natural number and Q is smaller than or equal to the number of interfaces, on which a state change occurs, among the active interfaces in the LACP link aggregation group.

According to another aspect, a device for link aggregation control protocol LACP link switching comprises a monitoring unit, a determining unit and a state adjusting unit, where:
the monitoring unit is configured to monitor state changes of interfaces in an LACP link aggregation group;
the determining unit is configured to, when monitoring that a state change occurs on an active interface in the LACP link aggregation group, determine whether a number of active interfaces in the LACP link aggregation group is smaller than a preset minimum active link number, and if yes, trigger the state adjusting unit;
the state adjusting unit is configured to, when the number of the active interfaces in the LACP link aggregation group is smaller than the preset minimum active link number, keep states of N interfaces among interfaces on which a state change occurs being an active state, so that the number of the active interfaces in the LACP link aggregation group is greater than or equal to the preset minimum active link number, wherein N is a natural number and N is smaller than or equal to the number of interfaces, on which a state change occurs, among the active interfaces in the LACP link aggregation group; and when monitoring that a state change occurs on an inactive interface in the LACP link aggregation group, adjust states of M interfaces among the N interfaces kept in the active state into an inactive state, where M is a natural number and M is smaller than or equal to N.

Optionally, the device can further comprises a timer, configured to be started when the states of the N interfaces among interfaces on which a state change occurs are kept in an active state; then, when no state change of an inactive interface in the LACP link aggregation group is monitored during a preset time, trigger the state adjusting unit, which is configured to adjust the states of M interfaces among the N interfaces kept in the active state into the inactive state.

According to still another aspect, a method for link aggregation control protocol LACP data transmission comprises:
monitoring state changes of interfaces in an LACP link aggregation group;
when monitoring that a state change occurs on an active interface in the LACP link aggregation group, determining whether a number of active interfaces in the LACP link aggregation group is smaller than the preset minimum active link number, and if yes, keeping states of N interfaces among interfaces on which a state change occurs being an active state, so that the number of the active interfaces in the LACP link aggregation group is greater than or equal to the preset minimum active link number; where, N is a natural number and N is smaller than or equal to the number of interfaces on which a state change occurs, among the active interfaces in the LACP link aggregation group; and
when monitoring that a state change occurs on an inactive interface in the LACP link aggregation group, adjusting states of M interfaces among the N interfaces kept in the active state into an inactive state, where M is a natural number and M is smaller than or equal to N;
performing message transmitting and receiving registration for the active interfaces in the LACP link aggregation group, and performing message receiving registration for an interface changing into the inactive state; and
performing data transmission according to the message transmitting and receiving registration of interfaces in the LACP link aggregation group.

Optionally, if a timer is started when an inactive interface in the LACP link aggregation group is registered by a message receiving, then the message receiving registration of the interface is deleted after the preset time elapses.

Optionally, the preset time is a long period or a short period of LACP configuration.

Yet another aspect of the present invention provides a device for link aggregation control protocol LACP data transmission, comprising a monitoring unit, a determining unit, a state adjusting unit, a message transmitting and receiving registration unit, and a data transmission unit, wherein:
the monitoring unit, configured to monitor state change of an interface in an LACP link aggregation group;
the determining unit, configured to, when monitoring that a state change occurs on an active interface in the LACP link aggregation group, determine whether the number of active interfaces in the LACP link aggregation group is smaller than the preset minimum active link number , and if yes, trigger the state adjusting unit;
the state adjusting unit, configured to, when the number of active interfaces in the LACP link aggregation group is smaller than the preset minimum active link number , keep N interfaces among the interfaces on which a state change occurs being an active state, so that the number of active interfaces in the LACP link aggregation group is greater than or equal to the preset minimum active link number; N is a natural number and N is smaller than or equal to the number of interfaces on which a state change occurs, among the active interfaces in the LACP link aggregation group; and when monitoring that a state change occurs on an inactive interface in the aggregation group, adjust the state of M interfaces among the N interfaces kept active into an inactive state, M is a natural number and M is smaller than or equal to N;
the message transmitting and receiving registration unit, configured to performing message transmitting and receiving registration for the active interfaces in the LACP link aggregation group, and performing message receiving registration for an interface changing into the inactive state; and
the data transmission unit, configured to perform data transmission according to the message transmitting and receiving registration of interfaces in the LACP link aggregation group.

In the technical solutions for LACP link switching provided by embodiments of the present invention, when monitoring the state of the interface changes and determining such change can cause LACP link switching, keep at least partial interfaces being changed from an active state into an inactive state at the state prior to change for a period of time, so that the number of active interfaces is greater than or equal to the preset minimum active link number, and not configure interfaces being changed from the active state into the inactive state to be inactive until new interfaces are changed from the inactive state into the active state.

In the embodiments of the present invention, when an LACP link switching event occurs, lock the interface on which a state change occurs, at the previous state, and not unlock the state until a new interface appears to take place of such interface, so that the LACP link aggregation group always can keep a constant state. In this way, the state change of the interface at a bottom logic layer will not affect the state of an aggregation group at a higher logic layer, thus smooth link transition can be achieved in the case of the link switching event, and the problem of affecting normal communication by frequent "flash-off" can be solved.

Furthermore, the technical solutions for LACP link data transmission provided by embodiments of the present invention, on the basis of the above method for link switching, classify the forwarding tables into two types: a message receiving data table and a message transmitting data table, and register the interface which changes from an active state into an inactive state into the message receiving data table. After such processing, the interface changing from the active state into the inactive state still can receive data message having been transmitted on the link before the state change during data transmission, thereby guaranteeing no data message is lost in the LACP link switching process.

### BRIEF DESCRIPTION OF THE DRAWINGS

FIGS. 1(a)∼(c) is a schematic diagram of an establishment procedure of an LACP link aggregation group;
FIG. 2 is a flow chart of a method for LACP link switching according to Embodiment 1 of the present invention;
FIG. 3 is a flow chart of a method for LACP link switching according to Embodiment 2 of the present invention;
FIG. 4 is a block diagram of a device for LACP link switching according to Embodiment 4 of the present invention;
FIG. 5 is a flow chart of a method for LACP link data transmission according to Embodiment 5 of the present invention; and
FIG. 6 is a block diagram of a device for LACP link data transmission according to Embodiment 6 of the present invention.

### DESCRIPTION OF EMBODIMENTS

Embodiments of the present invention provide a method and a device for LACP link switching. In the method and the device, when it is determined that a state change of a certain or some interfaces will cause the LACP link to switch, "lock" at least partial interfaces at the previous state before the change, so that the number of active interfaces is greater than or equal to a preset minimum active link number, and not "unlock" until new interfaces having the same "state" as the locked "state" appear. After such processing, when an LACP link switching event occurs, the state of the LACP link aggregation group only changes at the bottom layer, i.e., the interface, and remains unchanged on the higher logic layer, i.e., the link aggregation group, thus smooth transition in the LACP link switching can be achieved, and the problem of frequent "flash-off" caused by the subsequent link switching after the switching event can be solved.

For ease of understanding technical solutions of the present invention, an establishment procedure of an LACP link aggregation group and LACP link switching will be discussed in brief.

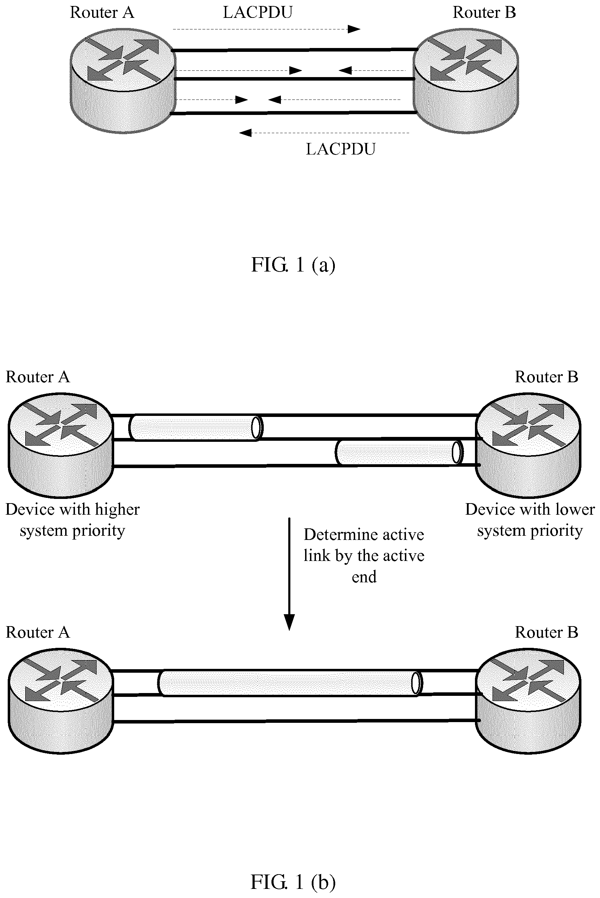

The establishment procedure of the LACP link aggregation group includes:
S101: Initiate an LACP link aggregation group establishment message, two end devices of the LACP link configure the LACP mode after receiving the aggregation group establishment message, and select the interface ready to be added in the LACP link aggregation group according to priorities of the respective interfaces, and such selected interfaces enable the LACP protocol, and the two end devices transmit LACPDU packets to each other. Referring to FIG. 1(a), two end devices of the LACP link are indicated by backup Router A and Router B, the solid lines between Router A and Router B indicate communication links, and arrows indicate the direction of LACPDU packet transmission.
S102: After the two end devices of the LACP link respectively receive the LACPDU packets transmitted by the device at the opposite end, according to system LACP priority and system ID in the LACPDU packet in combination with configuration of the local end, determine an active end device and a passive end device. The LACPDU packet mainly includes information as follows: system priority, system ID, interface operation key, interface priority, interface ID and interface state.
   Referring to FIG. 1(b), when Router B receives the LACPDU packet transmitted by Router A, Router B checks the LACPDU packet to learn the system priority and system ID of Router A, and compares them with its own system priority and system ID: if Router A has a system priority higher than Router B, then Router A is determined to be the active end device of the link, Router B to be the passive end device, otherwise, Router B is determined to be the active end device of the LACP link, Router A to be the passive end device. Similarly, when Router A receives the LACPDU packet transmitted by Router B, the active end device and the passive end device are also determined in the manner described above. In this example, provided that the system priority of Router A is 10, the priority of Router B is 11, Router A is determined to be the active end device, Router B to be the passive end device.
S103: determine an interface entering the aggregation group, on the basis of an interface priority of the active end device of the LACP link; when the two end devices achieve consistency through negotiation, establishment of a logic link based on the original communication link, namely the LACP link aggregation group is accomplished.

After the active end device and the passive end device of the LACP link are determined, two end devices of the LACP link both determine interfaces forming the aggregation group according to the interface priority of the active end device. A communication link is formed between corresponding interfaces of the two end devices, and multiple communication links (member link) form the logic link. Thereby, establishment of the LACP link aggregation group is accomplished. Not all the interfaces entering the aggregation group are in an active state. The number of active interfaces depends on the bandwidth requirement of the traffic transmission. Generally, the number of interfaces at one end of the LACP link aggregation group member link should be between a preset minimum active link number and a maximum active link number. Interfaces not entering the LACP link aggregation group and inactive member interfaces in the aggregation group form backup interfaces, configured to replace the active interfaces in the LACP link aggregation group when required. When the number of active interfaces in the LACP link aggregation group has not yet reached the preset maximum active link number, if, according to the traffic, the transmission bandwidth needs to be increased, the passive member interfaces in the LACP link aggregation group can be configured to be active. For ease of description, interfaces outside the LACP link aggregation group and member interfaces in the LACP link aggregation group all are simply referred to as interfaces in the embodiments hereinafter.

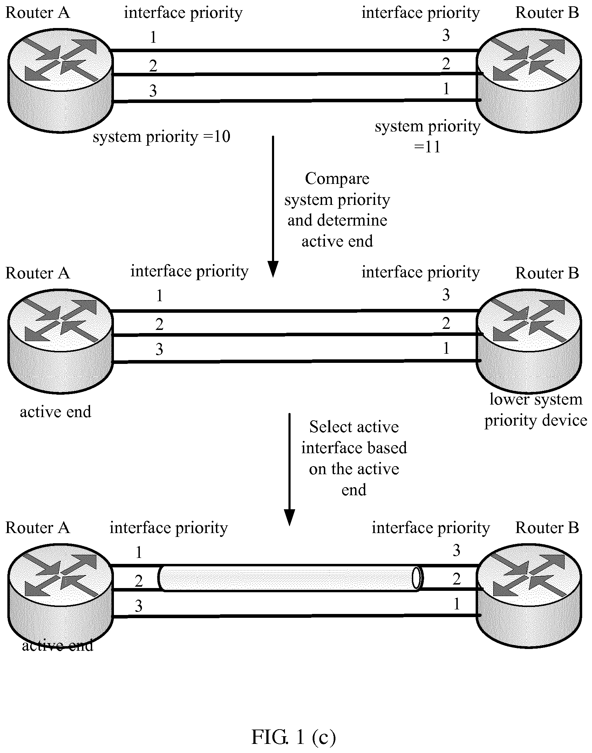

Referring to FIG. 1(c), Router A is an active end device, which has three interfaces, and Router B is a passive end device, which also has three interfaces. Provided that Router A has a preset maximum active link number of two, according to the interface priority principle, active interfaces entering the LACP link aggregation group are interfaces "1" and "2", corresponding interfaces of Router B and interfaces "1" and "2" of Router A establish links, such two links form an LACP link aggregation group and both the two links (four interfaces) of the LACP link aggregation group are active.

Hereinafter, objects and technical features of the present invention will be described in details with reference to embodiments and the accompanying drawings.

### Embodiment 1

After the LACP link aggregation group is established in the manner described above, whether the LACP link can perform normal communication depends on the current state of the LACP link aggregation group. The LACP link aggregation group has two types of states, an UP state and a DOWN state. When the number of active interfaces (marked as Selected, while inactive interfaces are marked as Unselected) at one end of the LACP link aggregation group is greater than or equal to the preset minimum active link number, the LACP link aggregation group is in the UP state, and the LACP link is ON and can perform normal communication; when the number of active interfaces (marked as Selected) at one end of the LACP link aggregation group is smaller than the preset minimum active link number , the LACP link aggregation group is in the DOWN state, and the LACP link is OFF and the communication is interrupted, and normal communication can be performed only when the LACP link aggregation group is in the UP state again and the communication has been re-established. The changing process between the UP state and the DOWN state of the LACP link aggregation group forms the LACP link switching.

The link switching from the UP state to the DOWN state is triggered by a switching event, which includes a Down event of the link, a link failure detected by an ETH-OAM, a link fault detected by an LACP and the like. The switching event causes corresponding interfaces in the LACP link aggregation group to change from a Selected state to a Unselected state, and when such state change of the interface causes the number of active interfaces in the LACP link aggregation group to be less than the minimal link number, the switching of the LACP link aggregation group from the UP state to the DOWN state is accomplished. The link switching from the DOWN state to the UP state is realized by LACP preemption, after an interface in the LACP link aggregation group is changed from the Selected state to the Unselected state, the inactive interfaces in the backup state replace the interface changing into the inactive state according to the priority, that is, the inactive interfaces in the backup state are changed from the Unselected state to the Selected state. When such state change of the interface causes the number of the active interfaces in the LACP link aggregation group to increase to be greater than the minimum active link number, the switching of the LACP link aggregation group from the DOWN state to the UP state is accomplished.

By way of example, it assumes that in order to keep an LACP link aggregation group in the UP state, at least 10 or more interfaces in the LACP link aggregation group should be kept in an active state, that is, the preset minimum active link number is 10, then, when a number of the active interfaces in the LACP link aggregation group is less than 10, the LACP link aggregation group changes from the UP state to the DOWN state. By contrast, when the number of the active interfaces in the LACP link aggregation group increases from less than 10 to 10 or to more than 10, the LACP link aggregation group changes from the DOWN state to the UP state.

Seen from the above, when the switching between UP and DOWN occurs frequently, the LACP link is extremely unstable, flash-off process of "ON-OFF-ON-OFF" is continuously repeated on the whole link, which affects normal communication, and if there is only one active interface in the aggregation group, the consequence of this situation becomes more serious.

Such process can be explained vividly through an example of making a phone call. User B makes a phone call to user A, after the call is connected and they talk on the line for a while, due to a certain reason, an LACP link of the line between user B and user A hops to the DOWN state from the UP state, the line is disconnected, the call is dropped, talking between user B and user A is forced to be interrupted. After a while, the LACP link returns to the UP state from the DOWN state, at this time, user B cannot directly continue his call, but has to redial to establish the connection with user A to continue the previous call. If the LACP link switches frequently, user B will need to dial for many times.

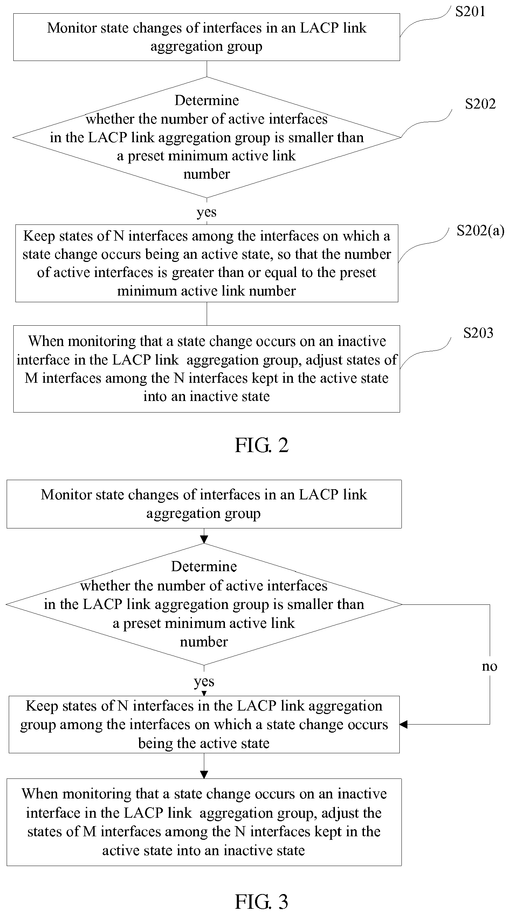

In order to avoid troubles and inconvenience to users caused by frequent flash-off of LACP in the LACP link switching process, the embodiments of the present invention provide a new method for LACP link switching. Referring to FIG. 2, the method includes:
S201: Monitor state changes of interfaces in an LACP link aggregation group.
   Interfaces in the LACP link aggregation group include active interfaces and inactive interfaces. Generally, the inactive interfaces are not automatically enabled, but change from an inactive sate to an active state only when the number of the active interfaces is reduced, so as to replace the interfaces changing from the active state into the inactive state. The state change of the active interfaces may cause a state of the LACP link aggregation group to hop from the UP state to the DOWN state, thus affect normal communication between two ends of the LACP link.
S202: When monitoring a state change occurs on an active interface in the LACP link aggregation group, determine whether the number of active interfaces in the LACP link aggregation group is smaller than a preset minimum active link number, and if yes, perform S202 (a): keep states of N interfaces among interfaces on which a state change occurs being the active state, so that the number of the active interfaces is greater than or equal to the preset minimum active link number, so as to keep the LACP link aggregation group in an UP state, where N is a natural number and N is smaller than or equal to the number of interfaces on which a state change occurs, among the active interfaces in the LACP link aggregation group.
   The interfaces changing from the active state into the inactive state may cause the number of the active interfaces to be reduced; when the number of the active interfaces in the LACP link aggregation group is reduced to be less than the preset minimum active link number, the state of the LACP link aggregation group will be affected. Therefore, when monitoring that an interface changes to an inactive state, determine whether the number of the active interfaces in the LACP link aggregation group is smaller than the preset minimum active link number, if, after the state change, the number of the active interfaces is less than the preset minimum active link number, then according to the requirements of satisfying the preset minimum active link number, configure N interfaces among the interfaces just changing from the active state to the inactive state to be active, and marked properly. After such processing, the LACP link aggregation group will consider the state of the interfaces is unchanged and continue to keep the UP state, and disconnection does not occur on the LACP link aggregation group, that is, although a certain link in the whole LACP link aggregation group is not available, the LACP link aggregation group fails to sense it and still keeps the "ON" state.
S203: When monitoring that a state change occurs on an inactive interface in the LACP link aggregation group, adjusts states of M interfaces among the N interfaces kept in the active state into an inactive state, so that the number of the active interfaces in the LACP link aggregation group is greater than or equal to the preset minimum active link number, where M is a natural number and M is smaller than or equal to N.

When the interface in the LACP link aggregation group changes from the active state to the inactive state, backup interfaces immediately become "animated", that which backup interface replaces the interface changing from the active state into the inactive state is determined by LACP preemption. Only after the "replacing old by new" is accomplished, M interfaces among the N interfaces changing from the active state to the inactive state are configured to be their real state, the inactive state, so that the number of the active interfaces in the LACP link aggregation group is greater than or equal to the preset minimum active link number.

In the technical solutions for LACP link switching provided by this embodiment, when monitoring the states of the interfaces change and determining such "hopping" of the interfaces will cause the state of the link aggregation group to hop, keep the interfaces changing from the active state into the inactive state at the original state (active state) for a period of time, until new interfaces changing from the inactive state into the active state appears and replace the above interfaces, and then configure the interfaces changing from the active state into the inactive state back to its real state.

In the embodiments of the present invention, when an switching event occurs on an LACP link, keep the interfaces at the previous state before the change until new active links appear, so that the state of the LACP link aggregation group does not change with the state of the interface, and consequently the state change in the interface layer is successfully "smoothed out" when reflecting on the layer of the LACP link aggregation group, the LACP link aggregation group is always kept at the previous state, the LACP link will not be off, and the whole link keeps a constant state without the frequent "flash-off", thus effectively guaranteeing the service level of the communication.

### Embodiment 2

In the embodiments of the present invention, the interfaces changing from the active state into the inactive state in the LACP link aggregation group are kept at the previous state (active state) until new interfaces appear. During this time period, new interface is "recommended" by the function of LACP preemption. In the practical operation, however, various reasons may cause LACP preemption failure or overlong time delay of the preemption, or even preemption being not performed. In the former case, for example, backup interfaces in the LACP link aggregation group are unavailable due to failure or there is no more backup interface, the backup links recommended according to the priority are unable to make the state of the LACP link aggregation group change back to the UP state from the DOWN state. In the latter case, for example, the function of LACP preemption is not configured at the enabled state, and without the function of LACP preemption, the LACP link is unable to select new interfaces for the replacement. When such case happens, the LACP link cannot keep waiting and make the state of the LACP link aggregation group at a "false" state for a long time. Therefore, the present invention provides another embodiment. This embodiment includes:
Monitor state changes of interfaces in an LACP link aggregation group;
When monitoring that a state change occurs on an active interface in the LACP link aggregation, determine whether the number of active interfaces in the LACP link aggregation group is smaller than a preset minimum active link number, and if yes, keep states of N interfaces among the interfaces on which a state change occurs being the active state, so that the number of the active interfaces in the LACP link aggregation group is greater than or equal to the preset minimum active link number, where N is a natural number and N is smaller than or equal to the number of interfaces on which a state change occurs, among the active interfaces in the LACP link aggregation group, and start a timer;
When no state change of an inactive interface in the LACP link aggregation group is monitored during a preset time of the timer, adjust states of M interfaces among the N interfaces kept in the active state into an inactive state, so that the number of active interfaces in the LACP link aggregation group is greater than or equal to the preset minimum active link number, where M is a natural number and M is smaller than or equal to N.

In this embodiment, a timer is configured to decide the length of the waiting time; when monitoring an active interface appears within the preset time of the timer, then according to the requirements of satisfying the preset minimum active link number, unlock the state of M interfaces among the N interfaces which are in state-keeping, and configure the state thereof back to the real state, and make the number of active interfaces in the LACP link aggregation group being greater than or equal to the preset minimum active link number; when not monitoring an active interface appears in the LACP link aggregation group after the preset time of the timer elapses, also unlock the state of at least one interface among M interfaces which are in state-keeping, and configure the state thereof back to the real state, such can avoid the case where, when no interface changes from the inactive state to the active state after a longer time of waiting, the LACP link is caused to be always kept at a false state and the LACP link resource cannot be released. The preset time of the timer in this embodiment can be configured as required, in this embodiment, the preset time can be set as a long period or a short period of LACP configuration, and the long period is 90s and the short period is 3s as specified in the current LACP protocol.

### Embodiment 3

The above two embodiments are mainly directed to the case where it is monitored that new inactive interface causes a state change of the LACP link aggregation group, but the case that new inactive interface appears without causing the state change of the LACP link aggregation group is not mentioned. In fact, when monitoring that there are active interfaces changing to the inactive state in the LACP link aggregation group, as long as the number of the active interfaces in the LACP link aggregation group is greater than or equal to the preset minimum active link number, the state of the LACP link aggregation group will not change. But, since the number of the active interfaces in the LACP link aggregation group is reduced, the number of the active links in the LACP link aggregation group will be reduced subsequently, the bandwidth for data transmission will also become smaller, and when new active interface appears, the number of the active links in the LACP link aggregation group will be increased subsequently, the bandwidth for data transmission will recover to the previous level. If the state of the interfaces in the LACP link aggregation group changes frequently, the bandwidth of the LACP link will vibrate, and traffic congestion is easily caused. To avoid such case, the present invention provides yet another embodiment. Referring to FIG. 3, this embodiment includes:
Monitor state changes of interfaces in an LACP link aggregation group;
When monitoring a state change occurs on an active interface in the LACP link aggregation group, no matter whether the number of active interfaces in the LACP link aggregation group is smaller than the preset minimum active link number, keep the states of N interfaces among the interfaces on which a state change occurs being the active state, so that the number of the active interfaces in the LACP link aggregation group is greater than or equal to the preset minimum active link number, where N is a natural number and N is smaller than or equal to the number of interfaces, on which a state change occurs, among the active interfaces in the LACP link aggregation group.

When monitoring that a state change occurs on an inactive interface in the LACP link aggregation group within a preset time, adjust the state of M interfaces among the N interfaces kept in the active state into an inactive state, so that the number of the active interfaces in the LACP link aggregation group is greater than or equal to the preset minimum active link number, where M is a natural number and M is smaller than or equal to N.

In this embodiment, no matter whether the number of the active interfaces in the LACP link aggregation group is smaller than the preset minimum active link number, N interfaces among the interfaces changing from the active state to the inactive state are all configured to be the active state, not unlock the above kept state until monitoring that new active interface replaces the interface changing into the inactive state, and configure the state back to the real state. Such not only can solve "flash-off" appearing in the LACP link aggregation group, but also facilitates control and avoids the bandwidth from vibrating.

Specifically, if the state change of the active interface is caused by the failure of the link itself, the above processing is performed before such failure causes the state of the LACP link aggregation group to change, instead of not being performed until the state of the LACP link aggregation group changes, so that the practical control is further facilitated; if the state change of the active interface is caused by reasons other than the failure of the link itself, then, the above processing is performed before the state change of the LACP link aggregation group caused by such reasons, the bandwidth can be kept stable within the period before the state of the LACP link aggregation group changes, so that data transmission rate can be prevented from being unstable and hopping.

### Embodiment 4

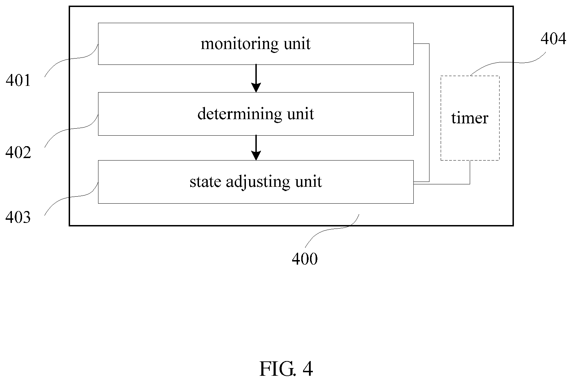

The above embodiments provide the method embodiments for LACP link switching. Correspondingly, the present invention also provides a device embodiment for LACP link switching. Referring to FIG. 4, the device 400 includes: a monitoring unit 401, a determining unit 402 and a state adjusting unit 403, where:
The monitoring unit 401 is configured to monitor state changes of interfaces in an LACP link aggregation group;
The determining unit 402 is configured to, when monitoring that a state change occurs on an active interface in the LACP link aggregation group, determine whether a number of active interfaces in the LACP link aggregation group is smaller than a preset minimum active link number, and if yes, trigger the state adjusting unit 403;
The state adjusting unit 403 is configured to, when the number of the active interfaces in the LACP link aggregation group is smaller than the preset minimum active link number, keep states of N interfaces among the interfaces on which a state change occurs being an active state, so that the number of the active interfaces in the LACP link aggregation group is greater than or equal to the preset minimum active link number, where N is a natural number and N is smaller than or equal to the number of interfaces on which a state change occurs, among the active interfaces in the LACP link aggregation group; and when monitoring that a state change occurs on an inactive interface in the aggregation group, adjust states of M interfaces among the N interfaces kept in the active state into an inactive state, so that the number of the active interfaces in the LACP link aggregation group is greater than or equal to the preset minimum active link number, where M is a natural number and M is smaller than or equal to N. That is, adjust the states of M interfaces among the N interfaces on which the state change occurs, into their real state: an inactive state.

The working process of the device 400 according to this embodiment is as follows: the monitoring unit 401 monitors the state changes of the interfaces in the LACP link aggregation group; when monitoring an interface changes from the active state to the inactive state, triggers the determining unit 402, and the determining unit 402 determines whether the number of the active interfaces in the LACP link aggregation group is smaller than the preset minimum active link number, if yes, triggers the state adjusting unit 403, the state adjusting unit 403 keeps the states of N interfaces among the interfaces on which a state change occurs, being in the active state, so that the number of the active interfaces in the LACP link aggregation group is greater than or equal to the preset minimum active link number, where N is a natural number and N is smaller than or equal to the number of interfaces on which a state change occurs, among the active interfaces in the LACP link aggregation group; and when monitoring that a state change occurs on an inactive interface in the aggregation group, triggers the state adjusting unit 403, the state adjusting unit 403 adjusts the states of M interfaces among the N interfaces kept in the active state into an inactive state, so that the number of the active interfaces in the LACP link aggregation group is greater than or equal to the preset minimum active link number, where M is a natural number and M is smaller than or equal to N. That is, adjust the state of at least one interface among the interfaces on which a state change occurs, into its real state: an inactive state.

In the technical solutions for LACP link switching provided by this device embodiment, when monitoring the states of the interfaces change and determining such "hopping" of the interfaces will cause the state of the LACP link aggregation group to hop, keep partial or all the interfaces changing from the active state into the inactive state at the original state (active state) for a period of time, until new interface changing from the inactive state into the active state appears, and then replace partial or all the above interfaces, so that the number of the active interfaces in the LACP link aggregation group is greater than or equal to the preset minimum active link number, and then configure the interface changing from the active state into the inactive state back to its real state.

In this embodiment of the present invention, when a switching event occurs on an LACP link, lock partial or all the interfaces on which the state change occurs at the previous state before the change until new active links appear, so that the state of the LACP link aggregation group does not change with the state change of the partial interfaces. Consequently, when reflected on the LACP link aggregation group layer, the state change in the interface layer is successfully "smoothed out", the LACP link aggregation group is always kept unchanged, the LACP link will not be off, and the whole link keeps a constant state without the frequent "flash-off", thus guaranteeing the service level of the communication.

The device can further include a timer 404, configured to be started when the states of the N interfaces among the interfaces on which a state change occurs are kept in the active state, then when no state change of the inactive interface in the LACP link aggregation group is monitored during a preset time, trigger the state adjusting unit 403; the state adjusting unit 403 adjusts the states of M interfaces among the N interfaces kept in the active state into the inactive state. Through configuring the timer 404, when monitoring an active interface in the LACP link aggregation group appears within a preset time of the timer 404, then unlock the state of M interfaces among the N interfaces which are in state-keeping, and configure the state of the M interfaces back to the real state, and when not monitoring an active interface appears in the LACP link aggregation group after the preset time of the timer 404 elapses, also unlock the state of the M interfaces among the N interfaces which are in state-keeping, and configure the state back to the real state. Such can avoid the cases where, when no interface changes from the inactive state to the active state after a longer time of waiting, the LACP link aggregation group is caused to be always kept at a false state and the LACP link resource cannot be released. The preset time of the timer in this device embodiment can be configured as required, in this embodiment, the preset time is preferably set as a long period or a short period of the LACP configuration, and the long period is 90s and the short period is 3s as specified in the current LACP protocol.

### Embodiment 5

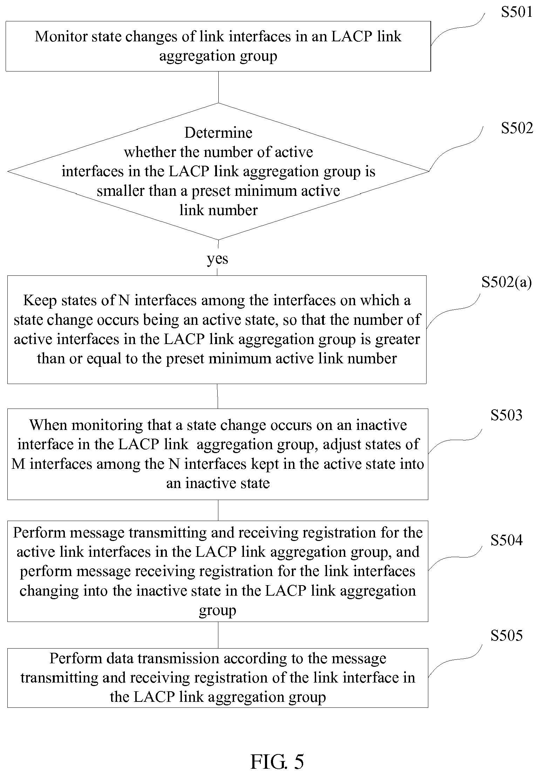

The establishment procedure of the aggregation group is described above, after the LACP link aggregation group is established on the LACP link, for achieving data transmission via the LACP link, a forwarding table needs to be generated according to the active interfaces in the LACP link aggregation group, so as to decide, after service data message arrives, which active interface receives data, and which active interface is used to transmit the service data generated by the local end. During data transmission in the prior art, all the active interfaces in the aggregation group are generally configured to have message receiving and transmitting functions at the same time, and inactive interfaces in the LACP link aggregation group are configured to have no data-transceiving function. When the state of the LACP link changes frequently and the state change is caused by reasons other than the failure of the link itself, such manner will cause message having been transmitted on the link to lose and affect normal communication. To this end, the invention provides an embodiment of a method for LACP link data transmission, which can avoid or reduce message loss. Referring to FIG. 5, this embodiment includes:
S501: Monitor states of interfaces in an LACP link aggregation group;
S502: When monitoring that a state change occurs on an active interface in the LACP link aggregation group, determine whether the number of active interfaces in the LACP link aggregation group is smaller than the preset minimum active link number, and if yes, then perform S502 (a): keep states of N interfaces among the interfaces on which a state change occurs, being in the active state, so that the number of the active interfaces in the LACP link aggregation group is greater than or equal to the preset minimum active link number, where N is a natural number and N is smaller than or equal to the number of interfaces on which a state change occurs, among the active interfaces in the LACP link aggregation group.
S503: When monitoring that a state change occurs on an inactive interface in the LACP link aggregation group, adjust the states of M interfaces among the N interfaces kept in the active state into an inactive state, so that the number of the active interfaces in the LACP link aggregation group is greater than or equal to the preset minimum active link number, where M is a natural number and M is smaller than or equal to N.
S504: Perform message transmitting and receiving registration for the active interfaces in the LACP link aggregation group, and perform message receiving registration for the interfaces changing into the inactive state in the LACP link aggregation group;
   The active interface in the LACP link aggregation group either can be a message receiving end for receiving the message from the opposite end, or can be a message transmitting end for transmitting the message of the local end. Therefore, message transmitting and receiving registration is performed for the active interface. The interface changing from the active state into the inactive state in the LACP link aggregation group are only registered as message receiving function, and the interface changing into the inactive state caused by reasons other than physical link failure of itself generally can continue to receive the message but without the transmitting function.
S505: Perform data transmission according to the message transmitting and receiving registration of the interface in the LACP link aggregation group; the LACP link accomplishes data transmission and forwarding according to the registered interface.

In this embodiment, under the condition of the LACP link state changing frequently, keep the states of the N interfaces changing from the active state into the inactive state, at the previous state before the change, for a period of time, unlock the kept state for partial or all the N interfaces when new interfaces appear, and recover the real state. Furthermore, when the interface is configured with functions, not only the registration of two directions of "receiving" and "transmitting" are performed for the active interface, but also the interfaces changing from the active state into the inactive state are registered as "receiving". This embodiment makes full use of functions of the interface, so that the message having been transmitted on the link can successfully arrive at the target end via corresponding interface, so as to avoid or reduce message loss.

The above embodiment for data transmission takes advantage of the property that after the interfaces changes from the active state into the inactive state its data receiving function is still kept for a period of time, however, such data receiving function will disappear as the time of changing into the inactive state becomes longer. Therefore, registering the interface changing from the active state into the inactive state as a "receiving" interface is not a "permanent solution", and keeping a long-term registration state also consumes memory resources. To this end, the present invention further provides an improved technical solution of the above embodiment as follows. A timer is started when performing the message receiving registration for the interface changing from the active state to the inactive state, then, when a preset time reaches, the message receiving registration of the interface is deleted. In this way, the corresponding interface can be deleted from the registration table after the preset time elapses, and then corresponding resources are released. Here, the preset time can be configured according to practical needs, generally, the preset time is preferably set as a long period or a short period of the LACP configuration, and the long period is 90s and the short period is 3s as specified in the current LACP protocol.

### Embodiment 6

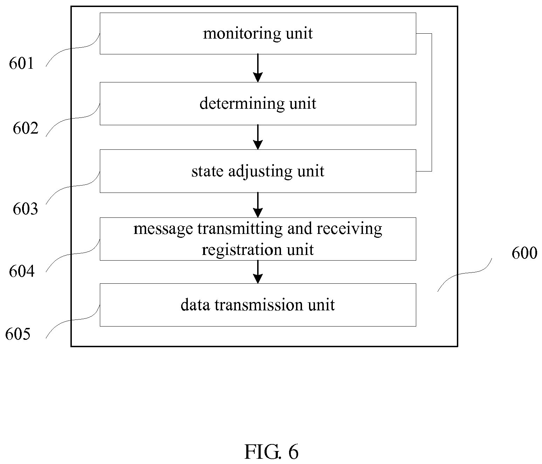

The above embodiment provide the method embodiment for LACP link data transmission, correspondingly, the present invention also provides a device embodiment. Referring to FIG. 6, the device 600 includes: a monitoring unit 601, a determining unit 602, a state adjusting unit 603, a message transmitting and receiving registration unit 604 and a data transmission unit 605, where:
The monitoring unit 601 is configured to monitor state changes of interfaces in an LACP link aggregation group;
The determining unit 602 is configured to, when monitoring that a state change occurs on an active interface in the LACP link aggregation group, determine whether the number of active interfaces in the LACP link aggregation group is smaller than a preset minimum active link number, and if yes, trigger the state adjusting unit 603;
The state adjusting unit 603 is configured to, when determining the number of the active interfaces in the LACP link aggregation group is smaller than the preset minimum active link number, keep N interfaces among the interfaces on which a state change occurs, being in an active state, so that the number of the active interfaces in the LACP link aggregation group is greater than or equal to the preset minimum active link number, where N is a natural number and N is smaller than or equal to the number of interfaces on which a state change occurs, among the active interfaces in the LACP link aggregation group; and when monitoring that a state change occurs on an inactive interface in the aggregation group, adjust states of M interfaces among the N interfaces kept in the active state into an inactive state, where M is a natural number and M is smaller than or equal to N.

The message transmitting and receiving registration unit 604 is configured to perform message transmitting and receiving registration for the active interface in the LACP link aggregation group, and perform message receiving registration for the interface changing into the inactive state in the LACP link aggregation group; and

The data transmission unit 605 is configured to perform data transmission according to the message transmitting and receiving registration of the interface in the LACP link aggregation group.

The working process of the device 600 according to this embodiment is as follows: the monitoring unit 601 monitors the state changes of the interfaces in the LACP link aggregation group; when monitoring an interface changes from the active state to the inactive state, enables the determining unit 602; the determining unit 602 determines whether the number of active interfaces in the LACP link aggregation group is smaller than the preset minimum active link number, if yes, triggers the state adjusting unit 603; the state adjusting unit 603 keeps the states of N interfaces among the interfaces on which the state change occurs, being
the active state; and when monitoring that there are inactive interfaces changing to the active state, triggers the state adjusting unit 603 to adjust the state of M interfaces among the N interfaces kept in the active state into the inactive state. Next, the message transmitting and receiving registration unit 604 performs message transmitting and receiving registration for the active interface in the LACP link aggregation group, and performs message receiving registration for the interface changing into the inactive state in the LACP link aggregation group; and then the data transmission unit 605 performs data transmission according to the message transmitting and receiving registration of the interface in the LACP link aggregation group.

Under the condition of the LACP link changing frequently, this device embodiment keeps at least partial or all the interfaces, which change from the active state into the inactive state, at the state prior to change for a period of time, unlocks such state-keeping for one or all the interfaces in state-keeping and recovers its real state only when new interfaces appear. When configuring the function of the interface, not only the active interfaces are registered respectively with two directions of "receiving" and "transmitting", but also the interfaces changing from the active state into the inactive state are registered as "receiving". This embodiment makes full use of functions of the interface, so that the message having been transmitted on the link can successfully arrive at the target end via the corresponding interface, so as to avoid or reduce message loss.

In the above embodiments, when determining the number of the active interfaces in the LACP link aggregation group is greater than or equal to the preset minimum active link number, Q interfaces among the interfaces on which a state change occurs also can be kept in the active state, so that the number of the active interfaces in the LACP link aggregation group is greater than or equal to the preset minimum active link number, where Q is a natural number and Q is smaller than or equal to the number of interfaces, on which a state change occurs, among the active interfaces in the LACP link aggregation group.

The embodiments described above are merely preferred embodiments of the present invention and not intended to limit the present invention. Any modification, equivalent replacement and improvement within the present invention are included in the protection scope of the present invention.

## Claims

1. A method for link aggregation control protocol, LACP, link switching, comprising:
monitoring (S201, S501) state changes of interfaces in an LACP link aggregation group;
when monitoring (S202, S202 (a), S502, S502 (a)) that a state change occurs on an active interface in the LACP link aggregation group, determining whether a number of active interfaces in the LACP link aggregation group is smaller than a preset minimum active link number, and if yes, keeping states of N interfaces among interfaces on which a state change occurs being an active state, so that the number of the active interfaces in the LACP link aggregation group is greater than or equal to the preset minimum active link number, wherein N is a natural number and N is smaller than or equal to the number of interfaces on which a state change occurs, among the active interfaces in the LACP link aggregation group; and
when monitoring (S203, S503) that a state change occurs on an inactive interface in the LACP link aggregation group, adjusting states of M interfaces among the N interfaces kept in the active state into an inactive state, wherein M is a natural number and M is smaller than or equal to N.

2. The method according to claim 1, wherein, when keeping states of the N interfaces among interfaces on which a state change occurs being an active state, a timer is started; then, when no state change of an inactive interface in the LACP link aggregation group is monitored during a preset time, the states of M interfaces among the N interfaces kept in the active state are adjusted into the inactive state.

3. The method according to claim 2, wherein the preset time is a long period or a short period of LACP configuration.

4. The method according to claim 1, wherein, when determining the number of the active interfaces in the LACP link aggregation group is greater than or equal to the preset minimum active link number, states of Q interfaces among interfaces on which a state change occurs are kept being the active state, so that the number of the active interfaces in the LACP link aggregation group is greater than or equal to the preset minimum active link number, Q is a natural number and Q is smaller than or equal to the number of interfaces on which a state change occurs, among the active interfaces in the LACP link aggregation group.

5. The method according to claim 1, further comprising :
performing (S504) message transmitting and receiving registration for the active interfaces in the LACP link aggregation group, and performing message receiving registration for an interface changing into the inactive state; and
performing (S505) data transmission according to the message transmitting and receiving registration of interfaces in the LACP link aggregation group.

6. The method according to claim 5, wherein, when the message receiving registration is performed for an interface changing into the inactive state, a timer is started; after a preset time elapses, the message receiving registration of the interface is deleted.

7. The method according to claim 6, wherein the preset time is a long period or a short period of LACP configuration.

8. A device for link aggregation control protocol, LACP, link switching, comprising a monitoring unit (401), a determining unit (402) and a state adjusting unit (403), wherein:
the monitoring unit (401) is configured to monitor state changes of interfaces in an LACP link aggregation group;
the determining unit (402) is configured to, when monitoring that a state change occurs on an active interface in the LACP link aggregation group, determine whether a number of active interfaces in the LACP link aggregation group is smaller than a preset minimum active link number, and if yes, trigger the state adjusting unit (403); and
the state adjusting unit (403) is configured to, when the number of the active interfaces in the LACP link aggregation group is smaller than the preset minimum active link number, keep states of N interfaces among interfaces on which a state change occurs being an active state, so that the number of the active interfaces in the LACP link aggregation group is greater than or equal to the preset minimum active link number, wherein N is a natural number and N is smaller than or equal to the number of interfaces on which a state change occurs, among the active interfaces in the LACP link aggregation group; and when monitoring that a state change occurs on an inactive interface in the aggregation group, adjust states of M interfaces among the N interfaces kept be the active state into an inactive state, wherein M is a natural number and M is smaller than or equal to N.

9. The device according to claim 8, wherein the device further comprises a timer (404), configured to be started when states of the N interfaces among interfaces on which a state change occurs are kept being an active state; then, when no state change of an inactive interface in the LACP link aggregation group is monitored during a preset time, trigger the state adjusting unit (403), and the state adjusting unit (403) is configured to adjust the states of M interfaces among the N interfaces kept in the active state into the inactive state.

10. The device according to claim 8, comprising a monitoring unit (601), a determining unit (602), a state adjusting unit (603), a message transmitting and receiving registration unit (604), and a data transmission unit (605), wherein:
the monitoring unit (601) is configured to monitor state changes of interfaces in an LACP link aggregation group;
the determining unit (602) is configured to, when monitoring that a state change occurs on an active interface in the LACP link aggregation group, determine whether a number of active interfaces in the LACP link aggregation group is smaller than a preset minimum active link number, and if yes, trigger the state adjusting unit (603);
the state adjusting unit (603) is configured to, when the number of the active interfaces in the LACP link aggregation group is smaller than the preset minimum active link number, keep states of N interfaces among interfaces on which a state change occurs being an active state, so that the number of the active interfaces in the LACP link aggregation group is greater than or equal to the preset minimum active link number, wherein N is a natural number and N is smaller than or equal to the number of interfaces on which a state change occurs, among the active interfaces in the LACP link aggregation group; and when monitoring that a state change occurs on an inactive interface in the aggregation group, adjust states of M interfaces among the N interfaces kept in the active state into an inactive state, wherein M is a natural number and M is smaller than or equal to N;
the message transmitting and receiving registration unit (604) is configured to perform message transmitting and receiving registration for the active interfaces in the LACP link aggregation group, and perform message receiving registration for an interface changing into the inactive state
the data transmission unit (605) is configured to perform data transmission according to the message transmitting and receiving registration of interfaces in the LACP link aggregation group.

## Patentansprüche

1. Verfahren zur Streckenumschaltung nach dem Streckenaggregationssteuerprotokoll, LACP, das Folgendes umfasst:
Überwachen (S201, S501) von Zustandsänderungen von Schnittstellen in einer LACP-Streckenaggregationsgruppe;
wenn beobachtet wird (S202, S202 (a), S502, S502 (a)), dass eine Zustandsänderung auf einer aktiven Schnittstelle in der LACP-Streckenaggregationsgruppe auftritt, Bestimmen, ob eine Anzahl aktiver Schnittstellen in der LACP-Streckenaggregationsgruppe kleiner ist als eine voreingestellte kleinste Anzahl aktiver Strecken, und falls ja, Halten der Zustände von N Schnittstellen unter Schnittstellen, auf denen eine Zustandsänderung auftritt, in einem aktiven Zustand, so dass die Anzahl der aktiven Schnittstellen in der LACP-Streckenaggregationsgruppe größer als die oder gleich der voreingestellten kleinsten Anzahl aktiver Strecken ist, wobei N eine natürliche Zahl ist und N kleiner als die oder gleich der Anzahl von Schnittstellen, auf denen eine Zustandsänderung auftritt, unter den aktiven Schnittstellen in der LACP-Streckenaggregationsgruppe ist; und wenn beobachtet wird (S203, S503), dass eine Zustandsänderung auf einer inaktiven Schnittstelle in der LACP-Streckenaggregationsgruppe auftritt, Anpassen der Zustände von M Schnittstellen unter den N Schnittstellen, die in dem aktiven Zustand gehalten sind, in einen inaktiven Zustand, wobei M eine natürliche Zahl ist und M kleiner als oder gleich N ist.

2. Verfahren nach Anspruch 1, wobei dann, wenn Zustände der N Schnittstellen unter Schnittstellen, auf denen Zustandsänderung auftritt, in einem aktiven Zustand gehalten sind, ein Zeitgeber gestartet wird; dann, wenn keine Zustandsänderung einer inaktiven Schnittstelle in der LACP-Streckenaggregationsgruppe während einer voreingestellten Zeit beobachtet wird, die Zustände von M Schnittstellen unter den N Schnittstellen, die in dem aktiven Zustand gehalten sind, in den inaktiven Zustand angepasst werden.

3. Verfahren nach Anspruch 2, wobei die voreingestellte Zeit eine lange Periode oder eine kurze Periode der LACP-Konfiguration ist.

4. Verfahren nach Anspruch 1, wobei dann, wenn die Anzahl der aktiven Schnittstellen in der LACP-Streckenaggregationsgruppe als größer als oder gleich der voreingestellten kleinsten Anzahl aktiver Strecken bestimmt wird, Zustände von Q Schnittstellen unter Schnittstellen, auf denen eine Zustandsänderung auftritt, in dem aktiven Zustand gehalten werden, so dass die Anzahl der aktiven Schnittstellen in der LACP-Streckenaggregationsgruppe größer als die oder gleich der voreingestellten kleinsten Anzahl aktiver Strecken ist, wobei Q eine natürliche Zahl ist und Q kleiner als die oder gleich der Anzahl von Schnittstellen, auf denen eine Zustandsänderung auftritt, unter den aktiven Schnittstellen in der LACP-Streckenaggregationsgruppe ist.

5. Verfahren nach Anspruch 1, das ferner Folgendes umfasst:
Ausführen (S504) von Nachrichtenübertragungs- und Empfangseintragung für die aktiven Schnittstellen in der LACP-Streckenaggregationsgruppe und Ausführen von Nachrichtenempfangseintragung für eine Schnittstelle, die in den inaktiven Zustand wechselt; und
Ausführen (S505) von Datenübertragung gemäß der Nachrichtenübertragungs- und
Empfangseintragung von Schnittstellen in der LACP-Streckenaggregationsgruppe.

6. Verfahren nach Anspruch 5, wobei dann, wenn die Nachrichtenempfangseintragung für eine Schnittstelle, die in den inaktiven Zustand wechselt, ausgeführt wird, ein Zeitgeber gestartet wird; nachdem eine voreingestellte Zeit abläuft, die Nachrichtenempfangseintragung der Schnittstelle gelöscht wird.

7. Verfahren nach Anspruch 6, wobei die voreingestellte Zeit eine lange Periode oder eine kurze Periode der LACP-Konfiguration ist.

8. Vorrichtung zur Streckenumschaltung nach dem Streckenaggregationssteuerprotokoll, LACP, die eine Überwachungseinheit (401), eine Bestimmungseinheit (402) und eine Zustandsanpassungseinheit (403) umfasst, wobei:
die Überwachungseinheit (401) konfiguriert ist, Zustandsänderungen von Schnittstellen in einer LACP-Streckenaggregationsgruppe zu überwachen;
die Bestimmungseinheit (402) konfiguriert ist, dann, wenn beobachtet wird, dass eine Zustandsänderung auf einer aktiven Schnittstelle in der LACP-Streckenaggregationsgruppe auftritt, zu bestimmen, ob eine Anzahl von aktiven Schnittstellen in der LACP-Streckenaggregationsgruppe kleiner ist als eine voreingestellte kleinste Anzahl aktiver Strecken, und falls ja die Zustandsanpassungseinheit (403) anzustoßen; und
die Zustandsanpassungseinheit (403) konfiguriert ist, wenn die Anzahl von aktiven Schnittstellen in der LACP-Streckenaggregationsgruppe kleiner als die voreingestellte kleinste Anzahl aktiver Strecken ist, Zustände von N Schnittstellen unter Schnittstellen, auf denen eine Zustandsänderung auftritt, in einem aktiven Zustand zu halten, so dass die Anzahl der aktiven Schnittstellen in der LACP-Streckenaggregationsgruppe größer als die oder gleich der voreingestellten kleinsten Anzahl aktiver Strecken ist, wobei N eine natürliche Zahl ist und N kleiner als die oder gleich der Anzahl von Schnittstellen, auf denen eine Zustandsänderung auftritt, unter den aktiven Schnittstellen in der LACP-Streckenaggregationsgruppe ist; und wenn beobachtet wird, dass eine Zustandsänderung auf einer inaktiven Schnittstelle in der Aggregationsgruppe auftritt, die Zustände von M Schnittstellen unter den N Schnittstellen, die in dem aktiven Zustand gehalten sind, in einen inaktiven Zustand anzupassen, wobei M eine natürliche Zahl ist und M kleiner als oder gleich N ist.

9. Vorrichtung nach Anspruch 8, wobei die Vorrichtung ferner einen Zeitgeber (404) umfasst, der konfiguriert ist, gestartet zu werden, wenn Zustände der N Schnittstellen unter Schnittstellen, auf denen eine Zustandsänderung auftritt, in einem aktiven Zustand gehalten sind; dann, wenn keine Zustandsänderung einer inaktiven Schnittstelle in der LACP-Streckenaggregationsgruppe während einer voreingestellten Zeit beobachtet wird, die Zustandsanpassungseinheit (403) anzustoßen, und die Zustandsanpassungseinheit (403) konfiguriert ist, die Zustände von M Schnittstellen unter den N Schnittstellen, die in dem aktiven Zustand gehalten sind, in den inaktiven Zustand anzupassen.

10. Vorrichtung nach Anspruch 8, die eine Überwachungseinheit (601), eine Bestimmungseinheit (602), eine Zustandsanpassungseinheit (603), eine Nachrichtenübertragungs- und Empfangseintragungseinheit (604) und eine Datenübertragungseinheit (605) umfasst, wobei:
die Überwachungseinheit (601) konfiguriert ist, Zustandsänderungen von Schnittstellen in einer LACP-Streckenaggregationsgruppe zu überwachen; die Bestimmungseinheit (602) konfiguriert ist, dann, wenn beobachtet wird, dass eine Zustandsänderung auf einer aktiven Schnittstelle in der LACP-Streckenaggregationsgruppe auftritt, zu bestimmen, ob eine Anzahl von aktiven Schnittstellen in der LACP-Streckenaggregationsgruppe kleiner ist als eine voreingestellte kleinste Anzahl aktiver Strecken, und falls ja die Zustandsanpassungseinheit (603) anzustoßen;
die Zustandsanpassungseinheit (603) konfiguriert ist, wenn die Anzahl von aktiven Schnittstellen in der LACP-Streckenaggregationsgruppe kleiner als die voreingestellte kleinste Anzahl aktiver Strecken ist, Zustände von N Schnittstellen unter Schnittstellen, auf denen eine Zustandsänderung auftritt, in einem aktiven Zustand zu halten, so dass die Anzahl der aktiven Schnittstellen in der LACP-Streckenaggregationsgruppe größer als die oder gleich der voreingestellten kleinsten Anzahl aktiver Strecken ist, wobei N eine natürliche Zahl ist und N kleiner als die oder gleich der Anzahl von Schnittstellen, auf denen eine Zustandsänderung auftritt, unter den aktiven Schnittstellen in der LACP-Streckenaggregationsgruppe ist; und wenn beobachtet wird, dass eine Zustandsänderung auf einer inaktiven Schnittstelle in der Aggregationsgruppe auftritt, die Zustände von M Schnittstellen unter den N Schnittstellen, die in dem aktiven Zustand gehalten sind, in einen inaktiven Zustand anzupassen, wobei M eine natürliche Zahl ist und M kleiner als oder gleich N ist;
die Nachrichtenübertragungs- und Empfangseintragungseinheit (604) konfiguriert ist, Nachrichtenübertragungs- und Empfangseintragung für die aktiven Schnittstellen in der LACP-Streckenaggregationsgruppe auszuführen und
Nachrichtenempfangseintragung für eine Schnittstelle, die in den inaktiven Zustand wechselt, auszuführen;
die Datenübertragungseinheit (605) konfiguriert ist, Datenübertragung gemäß der Nachrichtenübertragungs- und Empfangseintragung von Schnittstellen in der LACP-Streckenaggregationsgruppe auszuführen.

## Revendications

1. Procédé de commutation de liaison à protocole de contrôle d'agrégation de liens, LACP, comprenant les étapes suivantes :
surveiller (S201, S501) des changements d'états d'interfaces dans un groupe d'agrégation de liens LACP ;
lorsqu'il est décelé (S202, S202(a), S502, S502(a)) qu'un changement d'état se produit sur une interface active dans le groupe d'agrégation de liens LACP, déterminer si un nombre d'interfaces actives dans le groupe d'agrégation de liens LACP est inférieur à un nombre de liens actifs minimum prédéterminé et, si oui, maintenir les états de N interfaces, parmi les interfaces sur lesquelles un changement d'état se produit, comme étant un état actif, de manière à ce que le nombre des interfaces actives dans le groupe d'agrégation de liens LACP soit supérieur ou égal au nombre prédéterminé de liens actifs minimum, où N est un entier naturel et N est inférieur ou égal au nombre d'interfaces sur lesquelles un changement d'état se produit, parmi les interfaces actives dans le groupe d'agrégation de liens LACP ; et lorsqu'il est décelé (S203, S503) qu'un changement d'état se produit sur une interface inactive dans le groupe d'agrégation de liens LACP, ajuster des états de M interfaces parmi les N interfaces conservés dans l'état actif dans un état inactif, où M est un entier naturel et M est inférieur ou égal à N.

2. Procédé selon la revendication 1, dans lequel, lorsque l'on maintient comme étant un état actif les états des N interfaces parmi les interfaces sur lesquelles un changement d'état se produit, un minuteur est lancé ; ensuite, lorsqu'aucun changement d'état d'une interface inactive dans le groupe d'agrégation de liens LACP n'est décelé durant un temps prédéterminé, les états de M interfaces parmi les N interfaces conservés dans l'état actif sont ajustés dans l'état inactif.

3. Procédé selon la revendication 2, dans lequel le temps prédéterminé est une longue période ou une courte période de configuration LACP.

4. Procédé selon la revendication 1, dans lequel, lorsqu'il est déterminé que le nombre des interfaces actives dans le groupe d'agrégation de liens LACP est supérieur ou égal au nombre prédéterminé de liens actifs minimum, les états de Q interfaces parmi les interfaces sur lesquelles un changement d'état se produit sont maintenus étant l'état actif, de sorte que le nombre des interfaces actives dans le groupe d'agrégation de liens LACP est supérieur ou égal au nombre prédéterminé de liens actifs minimum, Q étant un entier naturel et Q étant inférieur ou égal au nombre d'interfaces sur lesquelles un changement d'état se produit, parmi les interfaces actives dans le groupe d'agrégation de liens LACP.

5. Procédé selon la revendication 1, comprenant en outre les étapes suivantes :
procéder (S504) à un enregistrement de transmission et de réception de message pour les interfaces actives dans le groupe d'agrégation de liens LACP, et procéder à un enregistrement de réception de message pour une interface passant dans l'état inactif ; et
effectuer (S505) une transmission de données conformément à l'enregistrement de transmission et de réception de message d'interfaces dans le groupe d'agrégation de liens LACP.

6. Procédé selon la revendication 5, dans lequel, lorsque l'enregistrement de réception de message est effectué pour une interface passant dans l'état inactif, un minuteur est lancé ; après qu'un temps prédéterminé s'est écoulé, l'enregistrement de réception de message de l'interface est effacé.

7. Procédé selon la revendication 6, dans lequel le temps prédéterminé est une longue période ou une courte période de configuration LACP.

8. Dispositif de commutation de liaison à protocole de contrôle d'agrégation de liens, LACP, comprenant une unité de surveillance (401), une unité de détermination (402) et une unité d'ajustement d'état (403), où :
l'unité de surveillance (401) est configurée pour surveiller des changements d'états d'interfaces dans un groupe d'agrégation de liens LACP ;
l'unité de détermination (402) est configurée pour, lorsqu'il est décelé qu'un changement d'état se produit sur une interface active dans le groupe d'agrégation de liens LACP, déterminer si un nombre d'interfaces actives dans le groupe d'agrégation de liens LACP est inférieur à un nombre de liens actifs minimum prédéterminé et, si oui, déclencher l'unité d'ajustement d'état (403) ; et
l'unité d'ajustement d'état (403) est configurée pour, lorsque le nombre d'interfaces actives dans le groupe d'agrégation de liens LACP est inférieur au nombre de liens actifs minimum prédéterminé, maintenir les états de N interfaces, parmi les interfaces sur lesquelles un changement d'état se produit, comme étant un état actif, de manière à ce que le nombre des interfaces actives dans le groupe d'agrégation de liens LACP soit supérieur ou égal au nombre de liens actifs minimum prédéterminé, où N est un entier naturel et N est plus petit ou égal au nombre d'interfaces sur lesquelles un changement d'état se produit, parmi les interfaces actives dans le groupe d'agrégation de liens LACP ; et lorsqu'il est décelé qu'un changement d'état se produit sur une interface inactive dans le groupe d'agrégation, ajuster les états de M interfaces parmi les N interfaces conservés dans l'état actif dans un état inactif, où M est un entier naturel et M est inférieur ou égal à N.

9. Dispositif selon la revendication 8, dans lequel le dispositif comprend en outre un minuteur (404), configuré pour être lancé lorsque des états des N interfaces parmi les interfaces sur lesquelles un changement d'état se produit sont maintenus comme étant un état actif ; ensuite, lorsqu'aucun changement d'état d'une interface inactive dans le groupe d'agrégation de liens LACP n'est décelé durant un temps prédéterminé, déclencher l'unité d'ajustement d'état (403), et l'unité d'ajustement d'état (403) est configurée pour ajuster les états de M interfaces parmi les N interfaces conservés dans l'état actif dans l'état inactif.

10. Dispositif selon la revendication 8, comprenant une unité de surveillance (601), une unité de détermination (602), une unité d'ajustement d'état (603), une unité d'enregistrement de transmission et de réception de message (604) et une unité de transmission de données (605), où :
l'unité de surveillance (601) est configurée pour surveiller des changements d'états d'interfaces dans un groupe d'agrégation de liens LACP ;
l'unité de détermination (602) est configurée pour, lorsqu'il est décelé qu'un changement d'état se produit sur une interface active dans le groupe d'agrégation de liens LACP, déterminer si un nombre d'interfaces actives dans le groupe d'agrégation de liens LACP est inférieur à un nombre de liens actifs minimum prédéterminé et, si oui, déclencher l'unité d'ajustement d'état (603) ;
l'unité d'ajustement d'état (603) est configurée pour, lorsque le nombre d'interfaces actives dans le groupe d'agrégation de liens LACP est inférieur au nombre de liens actifs minimum prédéterminé, maintenir les états de N interfaces, parmi les interfaces sur lesquelles un changement d'état se produit, comme étant un état actif, de manière à ce que le nombre des interfaces actives dans le groupe d'agrégation de liens LACP soit supérieur ou égal au nombre de liens actifs minimum prédéterminé, où N est un entier naturel et N est inférieur ou égal au nombre d'interfaces sur lesquelles un changement d'état se produit, parmi les interfaces actives dans le groupe d'agrégation de liens LACP ; et lorsqu'il est décelé qu'un changement d'état se produit sur une interface inactive dans le groupe d'agrégation, ajuster les états de M interfaces parmi les N interfaces conservés dans l'état actif dans un état inactif, où M est un entier naturel et M est inférieur ou égal à N ;
l'unité d'enregistrement de transmission et de réception de message (604) est configurée pour procéder à un enregistrement de transmission et de réception de message pour les interfaces actives dans le groupe d'agrégation de liens LACP, et
procéder à un enregistrement de réception de message pour une interface passant dans l'état inactif ; et
l'unité de transmission de données (605) est configurée pour effectuer une transmission de données conformément à l'enregistrement de transmission et de réception de message d'interfaces dans le groupe d'agrégation de liens LACP.
